# FASCICULE DE BREVET EUROPEEN

(11) **EP 2 314 507 B1**
(45) Date de publication et mention de la délivrance du brevet: **05.09.2012**
(21) Numéro de dépôt: 10009658.5
(22) Date de dépôt: 16.09.2010
(51) Int. Cl.: B64C 27/605

(54) **Ensemble de plateaux cycliques de commande de pas de pales d'un rotor principal, et un rotor muni d'un tel ensembe**
Taumelscheibeneinheit für Längs- und Quersteuerung eines Hauptrotors sowie ein Hauptrotor mit einer solchen Einheit
Pitch control swash plate assembly of a main rotor as well as a rotor with such an assembly

(30) Priorité: 23.10.2009 FR 0905111
(43) Date de publication de la demande: 27.04.2011
(73) Titulaire: EUROCOPTER, 13725 Marignane Cédex (FR)
(72) Inventeur: Girard, Vincent, 13770 Venelles (FR)
(74) Mandataire: GPI & Associés

(56) Documents cités:
- FR-A1- 2 768 996

## Description

La présente invention concerne un ensemble de plateaux cycliques de commande de pas de pales d'un rotor principal, et un rotor muni d'un tel ensemble.

En effet, le rotor principal d'un giravion a pour objet d'assurer la sustentation, voire même la propulsion, du giravion. Classiquement, un tel rotor principal, entraîné par une motorisation appropriée, comporte un mât rotor qui met en rotation une pluralité de pales via un moyeu rotor.

Afin de contrôler le déplacement du giravion, on contrôle le pas des pales du rotor principal, à savoir leur incidence aérodynamique. Dès lors, ce pas des pales est ajustable à l'aide de bielles de pas et d'un ensemble de plateaux cycliques entourant le mât rotor, les plateaux cycliques étant pourvus en principe d'un plateau tournant lié aux bielles de pas et d'un plateau non tournant lié aux commandes de vol.

Le plateau non tournant est la plupart du temps situé sous le plateau tournant et imprime ses mouvements selon l'axe de rotation du rotor au plateau tournant. Ainsi, le plateau tournant suit tous les mouvements du plateau non tournant et transmet ces mouvements aux pales via les bielles de pas.

Par suite, à l'aide par exemple d'une pluralité de servocommandes reliées à la structure du giravion et au plateau non tournant, les plateaux cycliques non tournant et tournant sont à même d'être translatés selon l'axe de rotation du mât rotor mais aussi d'être inclinés par rapport à ce mât rotor. Le plus souvent, la translation et l'inclinaison sont réalisées à l'aide d'un dispositif comprenant une rotule de mât centrée sur l'axe de rotation du rotor et coulissant le long d'un élément structural fixe entourant ledit mât rotor.

Le plateau cyclique non tournant est alors agencé de manière oscillante sur la rotule de mât de manière à pouvoir être incliné et translaté par rapport au mât rotor. De plus, le plateau non tournant est fixé à la structure du giravion à l'aide d'au moins un compas fixe qui l'empêche par conséquent de tourner autour de l'axe de rotation du rotor.

Le plateau tournant de l'ensemble de plateaux cycliques est alors lié au plateau non tournant par un organe permettant :
- au plateau tournant d'être solidaire du plateau non tournant en translation selon l'axe de rotation du rotor,
- au plateau tournant de s'incliner autour de ladite rotule de mât conjointement avec le plateau non tournant, et
- au plateau tournant d'effectuer une rotation autour dudit axe de rotation conjointement avec le rotor.

A cet effet, le plateau tournant est muni d'au moins un compas tournant relié au mât rotor, éventuellement par le moyeu du rotor principal, ce mât rotor entraînant en rotation le plateau tournant autour de l'axe de rotation.

Un compas, tournant ou non tournant, comporte en général deux bras articulés. Plus précisément, chaque compas comporte un bras primaire et un bras secondaire articulés entre eux par une première articulation, le bras primaire étant relié par une deuxième articulation au mât rotor ou à la structure le cas échéant, alors que le bras secondaire est relié au plateau tournant par une troisième articulation.

Bien qu'efficace, on constate que lesdites première, deuxième et troisième articulations subissent une usure importante qui implique des actions de maintenance onéreuses et récurrentes.

Pour y remédier, les compas sont souvent surdimensionnés, et sont donc finalement lourds et coûteux à fabriquer.

De plus, l'encombrement des compas est important du fait des débattements à prévoir.

Le document FR 2768996 vise ainsi à remplacer le compas tournant par des moyens légers, peu coûteux à fabriquer et générant une traînée aérodynamique optimisée.

L'ensemble de plateaux cycliques comporte alors un moyen d'entraînement alternatif au compas tournant muni de deux bras rigides diamétralement opposés, chaque bras rigide étant d'une part solidaire du mât rotor et, d'autre part, relié par un moyen de liaison ponctuel au plateau tournant.

Plus précisément, chaque bras est pourvu d'une section en forme de U délimitant une piste rigide d'entraînement dans laquelle est agencé un doigt du plateau tournant. La combinaison du doigt et de la piste rigide constitue alors le moyen de liaison ponctuel.

On note que pour coopérer avec la piste rigide d'entraînement, selon la variante le doigt comprend un galet, deux galets jumelées, un patin glissant, ou encore un patin glissant et un galet.

La solution du document FR 2768996 est intéressante.

Cependant, l'encombrement de cette solution demeure important. De plus, il y a un risque d'apparition de givre sur les pistes rigides d'entraînement susceptible de perturber le fonctionnement du moyen de liaison ponctuel.

La présente invention a alors pour objet de proposer un ensemble de plateaux cycliques muni d'un moyen d'entraînement peu couteux et robuste.

Selon l'invention, un ensemble de plateaux cycliques de commande de pas de pales d'un rotor principal de giravion est muni d'un plateau non tournant retenu contre toute rotation autour d'un axe de rotation et d'un plateau tournant apte à effectuer une rotation autour de l'axe de rotation,

Cet ensemble de plateaux cycliques est tel que décrit dans les revendications. Ainsi, cet ensemble de plateaux cycliques est notamment remarquable en ce que, ledit ensemble comportant un moyen d'entraînement apte à lier en rotation autour de l'axe de rotation le plateau tournant et un mât rotor du rotor principal, ce moyen d'entraînement est pourvu d'un bras d'entraînement et d'un moyen de liaison linéaire annulaire qui est solidaire du plateau tournant en rotation autour de l'axe de rotation, un première extrémité du bras d'entraînement étant reliée au plateau tournant par le moyen de liaison linéaire annulaire et une deuxième extrémité du bras d'entraînement étant apte à être reliée à un mât rotor par un moyen de liaison à glissière du moyen d'entraînement.

Ainsi, le plateau non tournant n'est pas entraîné en rotation par un compas mais par un unique bras d'entraînement, à savoir un coulisseau relié à un mât rotor et au plateau tournant respectivement par une liaison glissière et une liaison linéaire annulaire dont on maitrise parfaitement le fonctionnement.

On note que de telles liaisons glissière et linéaire annulaire sont nullement comparables à une liaison ponctuelle du type mis en oeuvre par le document FR 2768996. On se rapportera au document FR 2228663 qui décrit une liaison comportant une rotule en extrémité d'un bras d'un moyeu de rotor de giravion.

Ainsi, une fois agencée sur un mât rotor, la deuxième extrémité du bras d'entraînement est à même de coulisser selon l'axe de rotation du rotor sur ce mât rotor via le moyen de liaison à glissière, alors que la première extrémité de ce bras d'entraînement se déplace radialement par rapport au plateau tournant via le moyen de liaison linéaire annulaire.

L'invention prévoit donc un unique bras d'entraînement apte à être relié au mât rotor et au plateau tournant par des liaisons robustes et éprouvées.

Cette invention comporte éventuellement une ou plusieurs des caractéristiques additionnelles qui suivent.

Par exemple, le moyen de liaison à glissière comporte des premières cannelures solidaires de la deuxième extrémité du bras d'entraînement qui sont aptes à coopérer avec des deuxièmes cannelures du mât rotor, les premières cannelures étant agencées sur une périphérie interne d'un orifice traversant ménagé dans la deuxième extrémité du bras d'entraînement, chaque première cannelure étant disposée selon une direction parallèle audit axe de rotation.

Ainsi, la deuxième extrémité du bras d'entraînement entoure le mât rotor. De plus, les premières et deuxièmes cannelures solidarisent en rotation autour de l'axe de rotation le bras d'entraînement au mât rotor, en permettant en outre au bras d'entraînement de coulisser sur ce mât rotor.

Le bras d'entraînement est dès lors un coulisseau d'entraînement du fait de sa capacité à coulisser sur le mât rotor.

Selon une première variante, les premières cannelures peuvent être obtenues en usinant à cet effet la deuxième extrémité du bras d'entraînement.

Cependant, selon une deuxième variante le moyen de liaison à glissière comporte avantageusement une bague munie desdites premières cannelures, cette bague étant insérée dans la deuxième extrémité du bras d'entraînement pour délimiter ledit orifice devant accueillir le mât rotor.

La bague est par exemple manufacturée à l'aide d'un alliage d'aluminium, un traitement de surface nitruré étant éventuellement appliqué à cette bague.

Par conséquent, on perce la deuxième extrémité du bras d'entraînement et on agence la bague dans le perçage réalisé. A titre d'exemple, on insère en force la bague dans le perçage de la deuxième extrémité pour solidariser cette bague au bras d'entraînement.

Par ailleurs, le moyen de liaison linéaire annulaire peut comporter une rotule de liaison et un axe de fixation, la rotule de liaison étant solidarisée à la première extrémité du bras d'entraînement, l'axe de fixation étant solidarisé au plateau tournant et traversant de part en part la rotule de liaison.

La rotule de liaison est alors agencée dans une cage externe insérée dans la première extrémité, cette rotule de liaison étant libre de tourner sur elle-même à l'intérieur de ladite cage externe. De plus, la rotule de liaison comporte une cage interne traversée par l'axe de fixation. Ainsi, la rotule de liaison est à même de glisser sur l'axe de fixation et autorise une inclinaison de cet axe de fixation par rapport au bras d'entraînement.

Favorablement, l'axe de fixation est agencé dans le plan du plateau tournant. Cet axe de fixation est dirigé vers l'axe de rotation du plateau tournant, une droite virtuelle passant par ledit axe de fixation coupant alors ledit axe de rotation.

Optionnellement, le plateau tournant comporte une lumière dans laquelle est agencé l'axe de fixation.

Par ailleurs, le moyen de liaison linéaire annulaire comportant une rotule de liaison, un centre de cette rotule de liaison se trouve à une première distance de l'axe de rotation du rotor. Cette première distance est minimale de façon à limiter le phénomène d'arc-boutement du bras d'entraînement par rapport à ses cannelures et à réduire les débattements dans les moyens de liaisons à glissière et annulaire.

Il en résulte une diminution des efforts exercés sur le moyen d'entraînement en rotation du plateau tournant, et donc sur le bras d'entraînement, sur le moyen de liaison à glissière et sur le moyen de liaison linéaire annulaire de ce moyen d'entraînement.

Outre un ensemble de plateaux cyclique, l'invention a pour objet un rotor de giravion.

Ainsi, selon l'invention, un rotor de giravion est muni d'un mât rotor entraînant une pluralité de pales en rotation autour d'un axe de rotation, le rotor comportant un ensemble de plateaux cycliques de commande de pas des pales muni d'un plateau non tournant retenu contre toute rotation autour de l'axe de rotation et d'un plateau tournant apte à effectuer une rotation autour de cet axe de rotation, l'ensemble de plateaux cycliques comportant un moyen d'entraînement liant le plateau tournant et le mât rotor en rotation autour de l'axe de rotation.

Ce rotor est notamment remarquable en ce que, l'ensemble de plateaux cycliques étant tel que décrit précédemment, le moyen d'entraînement étant pourvu d'un bras d'entraînement ainsi que d'un moyen de liaison linéaire annulaire qui est solidaire du plateau tournant, une première extrémité du bras d'entraînement étant reliée au plateau tournant par le moyen de liaison linéaire annulaire et une deuxième extrémité du bras d'entraînement étant reliée au mât rotor par un moyen de liaison à glissière du moyen d'entraînement.

En outre, le mât rotor traversant un orifice de la deuxième extrémité du bras d'entraînement, le moyen de liaison à glissière comporte optionnellement des premières cannelures solidaires de la deuxième extrémité du bras d'entraînement, les premières cannelures étant agencées sur une périphérie d'un orifice traversant ménagé dans la deuxième extrémité du bras d'entraînement pour coopérer avec des deuxièmes cannelures du mât rotor, chaque première et deuxième cannelure étant disposée selon une direction parallèle à l'axe de rotation.

L'invention et ses avantages apparaîtront avec plus de détails dans le cadre de la description qui suit avec des exemples de réalisation donnés à titre illustratif en référence aux figures annexées qui représentent :
- la figure 1, une vue schématique explicitant l'invention,
- la figure 2, une coupe schématique de l'invention,
- la figure 3, une vue isométrique de l'invention, et
- les figures 4 et 5 des vues schématiques d'une variante du moyen de liaison linéaire annulaire.

Les éléments présents dans plusieurs figures distinctes sont affectés d'une seule et même référence.

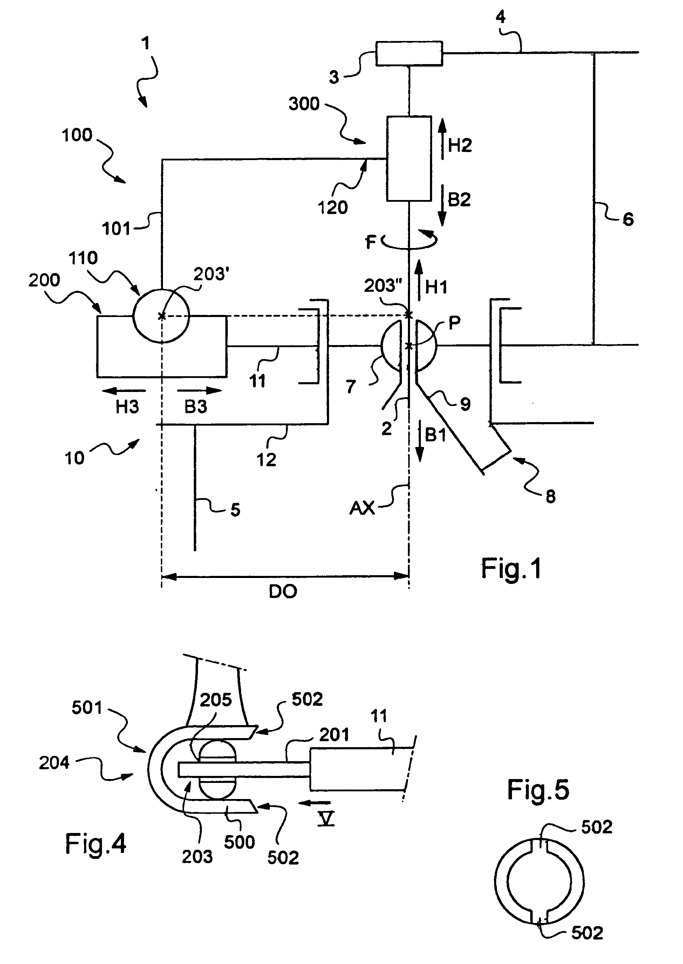

La figure 1 présente un vue schématique d'un rotor 1 muni d'un mât rotor 2 pour entraîner en rotation autour d'un axe de rotation AX, une pluralité de pales 4, chaque pale étant fixée au mât rotor 2 par un moyeu commun 3.

Ce rotor 1 étant un rotor principal de sustentation voire de propulsion d'un giravion, il est pourvu d'un ensemble 10 de plateaux cycliques relié aux commandes de vol par des servocommandes 5.

Plus précisément, l'ensemble 10 de plateaux cycliques comporte un plateau non tournant 12 agencé sur une rotule de mât 7 pouvant coulisser sur un élément 9 de la structure du giravion. De plus, le plateau non tournant 12 est lié à l'élément 9 par un compas non tournant 8, ce compas non tournant retenant le plateau non tournant contre toute rotation autour de l'axe de rotation AX.

D'autres moyens de retenu du plateau non tournant à l'élément 9 sont envisageables sans sortir du cadre de l'invention. Par exemple, le moyen de retenue décrit par le document FR 2768997 peut être implémenté.

En outre, l'ensemble 10 de plateaux cycliques comporte un plateau tournant 11 fixé au plateau non tournant 12 par une fixation permettant néanmoins au plateau tournant 11 d'effecteur un mouvement rotatif autour de l'axe de rotation AX, par rapport au plateau non tournant 12. Les plateaux tournant 11 et non tournant 12 sont alors coaxiaux.

Dès lors, le plateau non tournant 12 est relié aux commandes de vol par les servocommandes 5 alors que le plateau tournant est relié à chaque pale par une bielle de commande de pas 6.

Lorsque les commandes de pas requièrent une variation collective de pas, les servocommandes agissent sur le plateau non tournant 12 afin de translater conjointement les plateaux non tournant 12 et tournant 11 le long de l'axe de rotation AX. Par contre, si les commandes de pas requièrent une variation cyclique de pas, les plateaux non tournant 12 et tournant 11 s'inclinent conjointement par rapport à un point P correspondant au centre de la rotule de mât 7.

Par ailleurs, afin de pouvoir effectuer un mouvement rotatif autour de l'axe de rotation AX, l'ensemble 10 de plateaux cycliques possède un moyen d'entraînement 100 liant le plateau tournant 11 au mât rotor 2.

On se rapportera à la littérature pour obtenir plus d'informations quant à l'agencement et au fonctionnement des plateaux non tournant 12 et tournant 11 d'un ensemble 10 de plateaux cycliques. On peut aussi se rapporter au document FR2848524 qui décrit une liaison entre le plateau tournant et le plateau non-tournant.

Selon l'invention, le moyen d'entraînement 100 comprend un bras d'entraînement 101.

Une première extrémité 110 de ce bras d'entraînement 101 est reliée au plateau tournant 11 par un moyen de liaison linéaire annulaire 200, alors qu'une deuxième extrémité 120 du bras d'entraînement 101 est reliée au mât rotor 2 par une liaison à glissière 300.

On note que le moyen de liaison linéaire annulaire 200 comprend une rotule de liaison dont le centre 203' se situe à une première distance D0 de l'axe de rotation AX. Plus précisément, la première distance D0 est égale à la distance séparant le centre 203' de la rotule de liaison de la projection orthogonale 203" de ce centre 203' de la rotule de liaison sur l'axe de rotation AX.

Dès lors, le mât rotor 2 entraîne en rotation le bras d'entraînement 101 autour de l'axe de rotation AX, et par suite le plateau tournant 11.

De plus, le bras d'entraînement 101 n'entrave pas la chaîne de commande de pas des pales 4.

En effet, lorsque les servocommandes 5 requièrent une translation vers le haut des plateaux non tournant 12 et tournant 11 selon la flèche H1, le moyen de liaison à glissière 300 autorise un coulissement du bras d'entraînement 101 sur le mât rotor 2 vers le haut selon la flèche H2. En outre, si le plateau tournant 11 présente une angulation avec l'axe de rotation AX différente de 90 degrés, alors le moyen de liaison linéaire annulaire 200 autorise un déplacement radial de la première extrémité 110 du bras d'entraînement 101 vers l'extérieur du plateau tournant 11 selon la flèche H3 afin que la première distance D0 reste constante.

A l'inverse, lorsque les servocommandes 5 requièrent une translation vers le bas des plateaux non tournant 12 et tournant 11 selon la flèche B1, le moyen de liaison à glissière 300 autorise un coulissement du bras d'entraînement 101 sur le mât rotor 2 vers le bas selon la flèche B2. En outre, si le plateau tournant présente une angulation avec l'axe de rotation AX différente de 90 degrés, et donc une angulation par rapport à la position médiane représentée sur la figure 1 à laquelle le plateau tournant est orthogonal à l'axe de rotation AX , alors le moyen de liaison linéaire annulaire 200 autorise un déplacement radial de la première extrémité 110 du bras d'entraînement 101 vers l'extérieur du plateau tournant 11 selon la flèche H3.

On note que lorsque le pilote requiert un basculement du plateau tournant pour retourner vers la position médiane alors le moyen de liaison linéaire annulaire 200 autorise un déplacement radial de la première extrémité 110 du bras d'entraînement 101 vers l'intérieur du plateau tournant 11 selon la flèche B3.

Par ailleurs, si les servocommandes requièrent une inclinaison des plateaux non tournant 12 et tournant 11 autour du centre P de la rotule de mât 7, alors le moyen de liaison linéaire annulaire 200 autorise une inclinaison du plateau tournant 11 par rapport à la première extrémité 110 du bras d'entraînement 101. De plus, le moyen de liaison à glissière 300 tolère un coulissement de la deuxième extrémité 120 du bras d'entraînement 101 le long du mât rotor 2.

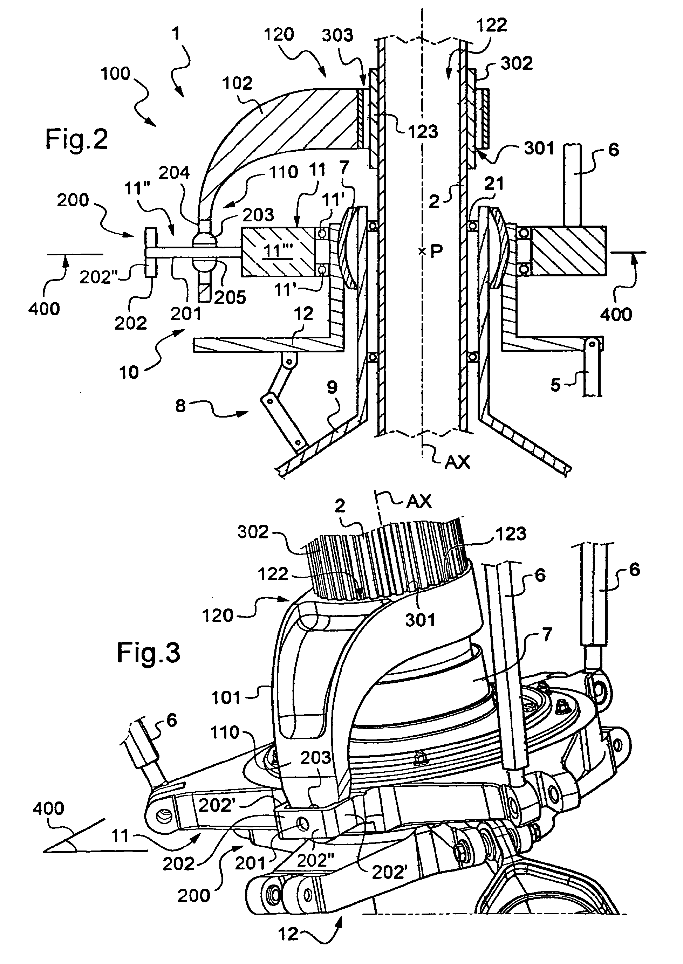

La figure 2 présente une coupe de l'invention selon une première variante.

On note que le mât rotor 2 traverse un élément 9 structural du giravion, des paliers 21 étant disposés entre ce mât rotor 2 et l'élément 9.

De plus, la figure 2 fait apparaître des roulements 11' entre le corps 11"' du plateau tournant 11 et le plateau non tournant 12, afin que le plateau tournant 11 puisse effectuer un mouvement rotatif autour de l'axe de rotation AX du rotor 1.

Par ailleurs, le plateau tournant 11 comporte une lumière 11" dans laquelle pénètre la première extrémité 110 du bras 100. Cette lumière 11" peut être obtenue à l'aide d'une chape 202 en forme de U munie de deux branches latérales 202' solidaires d'un fond commun 202", les branches latérales 202' étant solidaires du corps 11"' du plateau tournant 11 et étant représentées sur la figure 3.

On note que la lumière 11" peut être réalisée dans le corps 11"' du plateau tournant 11.

Le moyen de liaison annulaire 200 du moyen d'entraînement 100 est par suite muni d'un axe de fixation 201 obturant partiellement la lumière 11", cet axe de fixation 201 traversant la lumière 11" en s'étendant du fond commun 202" de la chape 202 vers le corps 11 "' du plateau tournant.

De plus, l'axe de fixation 201 est parallèle aux branches latérales 202 en étant agencé dans le plan 400 contenant le plateau tournant 11. Une droite virtuelle passant par l'axe de fixation 201 coupe alors favorablement l'axe de rotation AX en étant perpendiculaire à cet axe de rotation AX lorsque le plan 400 du plateau tournant 11 est perpendiculaire à l'axe de rotation AX.

Outre l'axe de fixation 201, le moyen de liaison linéaire annulaire 200 possède une rotule de liaison 203 agencé dans une cage externe 204, cette cage externe 204 étant insérée par exemple en force dans la première extrémité 110 du bras d'entraînement 101.

Par conséquent, l'axe de fixation 201 traverse une cage interne 205 de la rotule de liaison 203, cette rotule de liaison 203 pouvant de fait coulisser le long de l'axe de fixation 201.

Par ailleurs, la deuxième extrémité 120 du bras d'entraînement 101 du moyen d'entraînement 100 comporte un orifice 122, cet orifice traversant de part en part la deuxième extrémité 120. Le bras d'entraînement 101 est alors emmanché autour du mât rotor 2, la deuxième extrémité 120 du bras d'entraînement 101 entourant ledit mât rotor 2.

Le moyen de liaison à glissière 300 possède avantageusement des premières cannelures 301 ménagées sur la périphérie 123 de l'orifice 122.

Selon la première variante représentée sur la figure 2, le moyen de liaison à glissière 300 est muni d'une bague 303 dont la périphérie 123 interne comprend les premières cannelures et délimite l'orifice 122. Cette bague 303 est alors insérée dans la deuxième extrémité 120 du bras d'entraînement 101 par des méthodes usuelles, en étant inséré en force par exemple.

Selon la deuxième variante représentée sur la figure 3, la deuxième extrémité 120 est usinée pour présenter les premières cannelures 301 et ledit orifice 122. Par exemple, on perce la deuxième extrémité 120 pour réaliser l'orifice 122, puis on réalise des rainures dans la périphérie de l'orifice 122 pour créer les premières cannelures 301.

Ainsi, selon la deuxième variante, les premières cannelures du bras d'entraînement 101 sont obtenues par un usinage de la deuxième extrémité 120 de ce bras d'entraînement 101, alors que selon la première variante les premières cannelures résultent de l'insertion d'une bague 320 cannelée dans cette deuxième extrémité 120.

Indépendamment de la variante, les premières cannelures sont chacune disposées selon une direction parallèle à l'axe de rotation AX.

En outre, en référence aux figures 2 et 3, le mât rotor 2 comporte des deuxièmes cannelures 302 disposées selon une direction parallèle à l'axe de rotation AX.

Dès lors, lorsque le bras d'entraînement 101 est emmanché sur le mât rotor 2, les premières cannelures 301 coopèrent avec les deuxièmes cannelures 302. Ainsi, les deuxièmes cannelures 302 engrènent les premières cannelures en rotation autour de l'axe de rotation AX, tout en permettant à ces premières cannelures de coulisser le long du mât rotor 2.

Pour favoriser le coulissement des premières cannelures 301, la deuxième longueur des deuxièmes cannelures 302 est favorablement plus importantes que la première longueur des premières cannelures 301, les premières cannelures 301 étant alors en prise avec les deuxièmes cannelures 302 quelque soit la position verticale de la deuxième extrémité 120 à savoir quelque soit le coulissement effectué par cette deuxième extrémité 120 le long du mât rotor 2.

Par ailleurs, les figures 4 et 5 présentent des vues schématiques d'une variante du moyen de liaison linéaire annulaire.

Selon cette variante, au lieu de prévoir une cage externe de type annulaire insérée dans la première extrémité 110 du bras d'entraînement 100, la cage externe 204 a la forme d'un récipient accueillant la rotule de liaison 203 apte à coopérer avec un axe de fixation 201 solidaire du plateau tournant 11.

Par exemple, la cage externe 204 est munie d'un tunnel cylindrique 500 fixé à la première extrémité 110 du bras d'entraînement 100, par une soudure éventuellement. La première base dudit tunnel cylindrique opposée au plateau tournant 11 est obturée par un fond 501 alors que la deuxième base dudit tunnel cylindrique en regard de ce plateau tournant 11 reste ouverte.

Dès lors, l'axe de fixation 201 pénètre dans le tunnel cylindrique 500 et traverse la cage interne 205 de la rotule de liaison 203.

De plus, ce tunnel cylindrique est avantageusement muni de deux empochements 502 creusés dans la deuxième base du tunnel cylindrique 500 pour favoriser l'inclinaison du tunnel cylindrique 500 par rapport à l'axe de fixation 201.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, il est concevable d'envisager d'implémenter non pas un bras mais une pluralité de bras d'entraînement associés à des moyens de liaison à glissière et annulaire.

## Revendications

1. Ensemble (10) de plateaux cycliques (11, 12) de commande de pas de pales (4) d'un rotor principal (1) de giravion, ledit ensemble (10) étant muni d'un plateau non tournant (12) retenu contre toute rotation autour d'un axe de rotation (AX) et d'un plateau tournant (11) apte à effectuer une rotation autour dudit axe de rotation (AX), ledit ensemble (10) comportant un moyen d'entraînement (100) apte à lier en rotation autour dudit axe de rotation (AX) ledit plateau tournant (11) et un mât rotor (2) dudit rotor principal (1), ledit ensemble (10) est pourvu d'un bras d'entraînement (101) et d'un moyen de liaison linéaire annulaire (200) qui est solidaire dudit plateau tournant (11) en rotation autour de l'axe de rotation (AX), **caractérisé en ce que**, une première extrémité (110) dudit bras d'entraînement (101) étant reliée au plateau tournant (11) par ledit moyen de liaison linéaire annulaire (200) pour permettre un déplacement radial entre ledit bras d'entraînement (101) et le plateau tournant (11), une deuxième extrémité (120) dudit bras d'entraînement (101) étant apte à être reliée à un mât rotor (2) par un moyen de liaison à glissière (300) du moyen d'entraînement (100).

2. Ensemble de plateaux cycliques selon la revendication 1,
**caractérisé en ce que** ledit moyen de liaison à glissière (300) comporte des premières cannelures (301) solidaires de ladite deuxième extrémité (120) du bras d'entraînement (101) qui sont aptes à coopérer avec des deuxièmes cannelures (302) dudit mât rotor (2), lesdites premières cannelures (301) étant agencées sur une périphérie (123) d'un orifice (122) traversant ménagé dans ladite deuxième extrémité (120) du bras d'entraînement (101), chaque première cannelure (301) étant disposée selon une direction parallèle audit axe de rotation (AX).

3. Ensemble de plateaux cycliques selon la revendication 2,
**caractérisé en ce que** ledit moyen de liaison à glissière (300) comporte une bague (303) munie desdites premières cannelures (301), ladite bague (303) étant insérée dans ladite deuxième extrémité (120) du bras d'entraînement (101) pour délimiter ledit orifice (122).

4. Ensemble de plateaux cycliques selon l'une quelconque des revendications précédentes,
**caractérisé en ce que** ledit moyen de liaison linéaire annulaire (200) comporte une rotule de liaison (203) et un axe de fixation (201), ladite rotule de liaison (203) étant solidarisée à ladite première extrémité (110), ledit axe de fixation (201) étant solidarisé audit plateau tournant (11) et traversant de part en part ladite rotule de liaison (203).

5. Ensemble de plateaux cycliques selon la revendication 4,
**caractérisé en ce que** la rotule de liaison (203) est agencée dans une cage externe (204), ladite cage externe étant insérée dans la première extrémité (110) du bras d'entraînement, ladite rotule de liaison (203) étant libre de tourner sur elle-même à l'intérieur de ladite cage externe (204).

6. Ensemble de plateaux cycliques selon la revendication 4,
**caractérisé en ce que** ladite rotule de liaison (203) comporte une cage interne (205) traversée par l'axe de fixation (201) pour être à même de glisser sur ledit axe de fixation (201).

7. Ensemble de plateaux cycliques selon l'une quelconque des revendications 4 à 6,
**caractérisé en ce que** ledit axe de fixation est dirigé vers ledit axe de rotation (AX).

8. Ensemble de plateaux cycliques selon l'une quelconque des revendications 4 à 7,
**caractérisé en ce que** ledit plateau tournant (11) comporte une lumière (11") dans laquelle est agencé ledit axe de fixation (201).

9. Rotor (1) de giravion muni d'un mât rotor (2) entraînant une pluralité de pales (4) en rotation autour d'un axe de rotation (AX), ledit rotor (1) comportant un ensemble (10) de plateaux cycliques (11, 12) de commande de pas desdites pales (4) muni d'un plateau non tournant (12) retenue contre toute rotation autour dudit un axe de rotation (AX) et d'un plateau tournant (11) apte à effectuer une rotation autour de cet axe de rotation (AX), ledit ensemble (10) de plateaux cycliques comportant un moyen d'entraînement (100) liant ledit plateau tournant (11) et ledit mât rotor (2) en rotation autour dudit axe de rotation (AX),
**caractérisé en ce que,** ledit ensemble (10) de plateaux cycliques (11, 12) étant selon l'une quelconque des revendications précédentes, le moyen d'entraînement (100) est pourvu d'un bras d'entraînement (101) et d'un moyen de liaison linéaire annulaire (200) qui est solidaire dudit plateau tournant (11), une première extrémité (110) dudit bras d'entraînement (101) étant relié au plateau tournant (11) par ledit moyen de liaison linéaire annulaire (200) pour permettre un déplacement radial entre ledit bras d'entraînement (101) et le plateau tournant (11), une deuxième extrémité (120) dudit bras d'entraînement (101) étant reliée au mât rotor (2) par un moyen de liaison à glissière (300) du moyen d'entraînement.

10. Rotor selon la revendication 9,
**caractérisé en ce que,** ledit mât rotor (2) traversant un orifice (122) de ladite deuxième extrémité (120) du bras d'entraînement (101), ledit moyen de liaison à glissière (300) comporte des premières cannelures (301) solidaires de ladite deuxième extrémité (120) du bras d'entraînement (101), lesdites premières cannelures (301) étant agencées sur une périphérie (123) d'un orifice (122) traversant ménagé dans ladite deuxième extrémité (120) du bras d'entraînement (101) pour coopérer avec des deuxièmes cannelures (302) dudit mât rotor (2), chaque première et deuxième cannelures (301, 302) étant disposées selon une direction parallèle audit axe de rotation (AX).

## Claims

1. Assembly (10) of swashplates (11, 12) for controlling the pitch of blades (4) of a main rotor (1) of a rotorcraft, said assembly (10) being provided with a non-rotating swashplate (12) retained against any rotation about an axis of rotation (AX), and a rotating swashplate (11) capable of rotating about said axis of rotation (AX), said assembly (10) comprising drive means (100) capable of connecting said rotating swashplate (11) and a rotor mast (2) of said main rotor (1) in terms of rotation about said axis of rotation (AX), said assembly (10) is provided with a drive arm (101) and annular linear connection means (200) integral with said rotating swashplate (11) in terms of rotation about the axis of rotation (AX),
**characterised in that** a first end (110) of said drive arm (101) being connected to the rotating swashplate (11) by said annular linear connection means (200) to permit radial displacement between said drive arm (101) and the rotating swashplate (11), a second end (120) of said drive arm (101) being capable of being connected to a rotor mast (2) by a slide connection means (300) of the drive means (100).

2. Assembly of swashplates according to Claim 1,
**characterised in that** said slide connection means (300) comprise first flutes (301) integral with said second end (120) of the drive arm (101) and capable of co-operating with second flutes (302) of said rotor mast (2), said first flutes (301) being arranged on a periphery (123) of a through orifice (122) formed in said second end (120) of the drive arm (101), each first flute (301) being disposed in a direction parallel to said axis of rotation (AX).

3. Assembly of swashplates according to Claim 2,
**characterised in that** said slide connection means (300) include a ring (303) provided with said first flutes (301), said ring (303) being inserted in said second end (120) of the drive arm (101) to define said orifice (122).

4. Assembly of swashplates according to any one of the preceding claims,
**characterised in that** said annular linear connection means (200) comprise a ball joint (203) and a fastening pin (201), said ball joint (203) being secured to said first end (110), said fastening pin (201) being secured to said rotating swashplate (11) and passing through said ball joint (203).

5. Assembly of swashplates according to Claim 4,
**characterised in that** the ball joint (203) is arranged in an outer cage (204), said outer cage being inserted in the first end (110) of the drive arm, said ball joint (203) being free to revolve inside said outer cage (204).

6. Assembly of swashplates according to Claim 4,
**characterised in that** said ball joint (203) comprises an inner cage (205) through which the fastening pin (201) passes to enable sliding on said fastening pin (201).

7. Assembly of swashplates according to any one of Claims 4 to 6,
**characterised in that** said fastening pin is directed towards said axis of rotation (AX).

8. Assembly of swashplates according to any one of Claims 4 to 7,
**characterised in that** said rotating swashplate (11) includes a slot (11") in which said fastening pin (201) is arranged.

9. Rotor (1) of a rotorcraft provided with a rotor mast (2) driving a plurality of blades (4) in rotation about an axis of rotation (AX), said rotor (1) comprising an assembly (10) of swashplates (11, 12) for controlling the pitch of said blades (4), provided with a non-rotating swashplate (12) retained against any rotation about said axis of rotation (AX), and a rotating swashplate (11) capable of rotating about this axis of rotation (AX), said assembly (10) of swashplates comprising drive means (100) connecting said rotating swashplate (11) and said rotor mast (2) in terms of rotation about said axis of rotation (AX),
**characterised in that**, for said assembly (10) of swashplates (11, 12) being according to any one of the preceding claims, the drive means (100) is provided with a drive arm (101) and annular linear connection means (200) integral with said rotating swashplate (11), a first end (110) of said drive arm (101) being connected to the rotating swashplate (11) by said annular linear connection means (200) to permit radial displacement between said drive arm (101) and the rotating swashplate (11), a second end (120) of said drive arm (101) being connected to the rotor mast (2) by a slide connection means (300) of the drive means.

10. Rotor according to Claim 9,
**characterised in that**, for said rotor mast (2) passing through an orifice (122) in said second end (120) of the drive arm (101), said slide connection means (300) comprise first flutes (301) integral with said second end (120) of the drive arm (101), said first flutes (301) being arranged on a periphery (123) of a through orifice (122) formed in said second end (120) of the drive arm (101), to cooperate with second flutes (302) of said rotor mast (2), each first and second flutes (301, 302) being disposed in a direction parallel to said axis of rotation (AX).

## Patentansprüche

1. Taumelscheibeneinheit (10, 11, 12) zur Steuerung des Anstellwinkels der Blätter (4) eines Hauptrotors (1) eines Drehflügelflugzeugs, mit einer sich nicht drehenden Scheibe (12), die gegen jede Drehung um eine Drehachse (AX) festgehalten ist, und mit einer sich drehenden Scheibe (11), die eine Drehung um diese Drehachse (AX) ausführen kann, wobei die Einheit (10) ein Antriebsmittel (100) aufweist, das die sich drehende Scheibe (11) und eine Rotorwelle (2) des Hauptrotors (1) zu einer Drehbewegung um die Drehachse (AX) verbinden kann, und die Einheit (10) mit einem Antriebsarm (101) und einem linearen, ringförmigen Verbindungsmittel (200) versehen ist, welches drehfest mit der sich um die Drehachse (AX) drehenden Scheibe verbunden ist,
**dadurch gekennzeichnet, dass** ein erstes Ende (110) des Antriebsarms (101) mit der sich drehenden Scheibe (11) über das lineare, ringförmige Verbindungsmittel (200) verbunden ist, um eine radiale Verschiebung zwischen dem Antriebsarm (101) und der sich drehenden Scheibe (11) zu ermöglichen und wobei ein zweites Ende (120) des Antriebsarms (101) mit einer Rotorwelle (2) über ein Verbindungsmittel mit einer Gleitschiene (300) des Antriebsmittels (100) verbunden werden kann.

2. Taumelscheibeneinheit nach Anspruch 1,
**dadurch gekennzeichnet, dass** das Verbindungsmittel mit Gleitschiene (300) erste Längsnuten (301) aufweist, die sich am zweiten Ende (120) des Antriebsarms (101) befinden und die mit zweiten Längsnuten (302) der Rotorwelle (2) zusammenwirken können, wobei die ersten Längsnuten (301) auf einem Umfang (123) einer Durchgangsöffnung (122) angeordnet sind, die in das zweite Ende (120) des Antriebsarms (101) eingearbeitet ist, wobei jede der ersten Längsnuten (301) in einer Richtung parallel zu Drehachse (AX) ausgerichtet ist.

3. Taumelscheibeneinheit nach Anspruch 2,
**dadurch gekennzeichnet, dass** das Verbindungsmittel mit Gleitschienen (300) einen Ring (303) aufweist, der mit den ersten Längsnuten (301) versehen ist, wobei der Ring (303) in das zweite Ende (120) des Antriebsarms (101) eingefügt ist, um die Öffnung (122) zu umgrenzen.

4. Taumelscheibeneinheit nach einem der vorstehenden Ansprüche,
**dadurch gekennzeichnet, dass** das lineare, ringförmige Verbindungsmittel (200) ein Kugel-Verbindungsgelenk (203) und eine Befestigungsachse (201) aufweist, wobei das Kugel-Verbindungsgelenk (203) mit dem ersten Ende (110) fest verbunden ist, und die Befestigungsachse (201) an der sich drehenden Scheibe (11) befestigt ist und das Kugel-Verbindungsgelenk (203) vollständig durchquert.

5. Taumelscheibeneinheit nach Anspruch 4,
**dadurch gekennzeichnet, dass** das Kugel-Verbindungsgelenk (203) in einem äußeren Gehäuse (204) angeordnet ist, welches in das erste Ende (110) des Antriebsarms eingefügt ist, wobei das Kugel-Verbindungsgelenk (203) sich im Inneren des äußeren Gehäuses (204) um sich selbst herum drehen kann.

6. Taumelscheibeneinheit nach Anspruch 4,
**dadurch gekennzeichnet, dass** das Kugel-Verbindungsgelenk (203) ein inneres Gehäuse (205) aufweist, welches von der Befestigungsachse (201) durchquert wird, um in der Lage zu sein, auf der Befestigungsachse (201) zu gleiten.

7. Taumelscheibeneinheit nach einem der Ansprüche 4 bis 6,
**dadurch gekennzeichnet, dass** die Befestigungsachse auf die Drehachse (AX) gerichtet ist.

8. Taumelscheibeneinheit nach einem der Ansprüche 4 bis 7,
**dadurch gekennzeichnet, dass** die sich drehende Platte (11) eine Öffnung (11") aufweist, in der die Befestigungsachse (201) angeordnet ist.

9. Rotor (1) eines Drehflügelflugzeugs mit einer Rotorwelle (2), die eine Mehrzahl von Blättern (4) zu einer Drehbewegung um eine Drehachse (AX) treibt, wobei der Rotor (1) eine Taumelscheibeneinheit (10, 11, 12) zur Steuerung des Anstellwinkels der Blätter (4) aufweist, die mit einer sich nicht drehenden Scheibe (12) versehen ist, die gegen jede Drehbewegung um die eine Drehachse (AX) festgehalten ist und mit einer sich drehenden Scheibe (11), die eine Drehbewegung um diese Drehachse (AX) ausführen kann, wobei die Taumelscheibeneinheit (10) ein Antriebsmittel (100) aufweist, welches die sich drehende Scheibe (11) und die Rotorwelle (2) zu einer Drehbewegung um die Drehachse (AX) miteinander verbindet,
**dadurch gekennzeichnet, dass** die Taumelscheibeneinheit (10, 11, 12) nach einem der vorstehenden Ansprüche ausgebildet ist und das Antriebsmittel (100) mit einem Antriebsarm (101) und einem linearen ringförmigen Verbindungsmittel (200) versehen ist, welches mit der sich drehenden Scheibe (11) fest verbunden ist, wobei ein erstes Ende (110) des Antriebsarms (101) mit der sich drehenden Scheibe (11) über das lineare ringförmige Verbindungsmittel (200) verbunden ist, um eine Radialverschiebung zwischen dem Antriebsarm (101) und der sich drehenden Scheibe (11) zu ermöglichen, wobei ein zweites Ende (120) des Antriebsarms (101) mit der Rotorwelle (2) über ein Verbindungsmittel mit einer Gleitschiene (300) des Antriebsmittels verbunden ist.

10. Rotor nach Anspruch 9,
**dadurch gekennzeichnet, dass** die Rotorwelle (2) eine Öffnung (122) des zweiten Endes (120) des Antriebsarms (101) durchquert, das Verbindungsmittel mit Gleitschiene (300) erste Längsnuten (301) am zweiten Ende (120) des Antriebsarms (101) aufweist, die ersten Längsnuten (301) auf einem Umfang (123) einer Durchgangsöffnung (122) angeordnet sind, die in dem zweiten Ende (120) des Antriebsarms (101) eingearbeitet ist, um mit den zweiten Längsnuten (302) der Rotorwelle (2) zusammenzuwirken, wobei jede der ersten und zweiten Längsnuten (301, 302) parallel zu der Drehachse (AX) ausgerichtet ist.
